# EUROPEAN PATENT SPECIFICATION

(11) **EP 1 305 100 B1**
(45) Date of publication and mention of the grant of the patent: **29.09.2004**
(21) Application number: 01928076.7
(22) Date of filing: 08.05.2001
(51) Int. Cl.: B01D 33/03, B07B 1/46

(54) **A SCREEN ARRANGEMENT AND A SUPPORT STRUCTURE FOR A VIBRATORY SEPARATOR**
SIEBANORDNUNG UND STÜTZSTRUKTUR FÜR EINE VIBRATIONSTRENNVORRICHTUNG
DISPOSITIF TAMIS ET STRUCTURE DE SUPPORT POUR SEPARATEUR VIBRANT

(30) Priority: 17.06.2000 US 596347
(43) Date of publication of application: 02.05.2003
(60) Divisional application: 04075166.1
(73) Proprietor: Varco I/P, Inc., Houston, TX 77051 (US); LUCAS, Brian Ronald, Warlingham, Surrey CR6 9HJ (GB)
(72) Inventor: SCHULTE, David, Lee Jr., Broussard, LA 70518 (US); ADAMS, Thomas, Cole, Hockley, TX 77447 (US); SEYFFERT, Kenneth, Wayne, Houston, TX 77018 (US); LARGENT, David, Wayne, Cleveland, TX 77327 (US); MCCLUNG, Guy, Lamont, III, Spring, TX 77379 (US); WALKER, Jeffery, Earl, Lafayette, LA 70508 (US); MURRAY, Hector, M., Houston, TX 77041 (US)
(74) Representative: Lucas, Brian Ronald
(86) International application number: PCT/GB2001/002000
(87) International publication number: WO 2001/097947

(56) References cited:
- WO-A-01/76719
- WO-A-84/02290
- WO-A-96/04060
- WO-A-96/11070
- WO-A-98/37988
- GB-A- 2 206 501
- US-A- 5 137 622

## Description

The present invention relates to a screen arrangement for a vibratory separator, a screen assembly for the screen arrangement and a vibratory separator.

Screen assemblies are generally used in shale shakers. A typical use for a shale shaker is separating solids from liquids in the drilling of a wellbore for oil and gas. During drilling of a wellbore, a liquid known as mud is circulated in the well. Circulation involves introducing mud into the well and pumping the mud down a pipe such as a drill string. The mud picks up cuttings and other particles from the bottom of the wellbore and are returned to the top of the well via an annulus formed by the drill pipe and the wellbore. Particle and rock laden mud exits the well and is reconditioned ready to be reused. Part of the conditioning process involves filtering the mud in a vibratory shaker, such as a shale shaker. The shale shaker generally comprises a bucket, a pretensioned screen for screening the particle laden mud and a motor for vibrating the bucket and screen. A typical example of a shale shaker is disclosed in

WO-A-96/33792, owned by the applicant for the present application. It will be appreciated that the screen needs to be replaced frequently due to heavy wear. It has been found that screens can be pretensioned and mounted on a supporting structure to form a screen assembly. The screen assembly may be placed in and removed from the shale shaker quickly, thereby reducing downtime of the shale shaker. Screen assemblies are arranged therein, typically placed end to end resting at their sides on a ledge welded to the bucket. Such a screen assembly is disclosed in EP-A-0 169 698. The screen assemblies are generally expensive to manufacture, are heavy and are prone to failure in use.

GB-A-2,206,501 discloses a frame for a filtering screen, the frame being of rectangular shape, wherein opposed ends of the frame are formed respectively with a tongue and a groove configuration, so that when in abutting relationship with another frame the tongue of the next frame, forming a seal past which material to be filtered is prevented from passing.

However, it has been found that this arrangement is not suitable for screen assemblies which are used in modern shale shakers. Problems with wear between adjacent screens and buffeting during the vibratory motion of the shale shaker may cause gaps to form between screens.

According to the present invention, there is provided a screen arrangement for a vibratory separator, the screen arrangement comprising a first screen assembly having a frame to which is mounted screening material and a second screen assembly having a frame to which is mounted screening material, one of the frames having a tongue and the other having a groove for receiving said tongue, wherein one of said tongue and groove has a seal member arranged thereon..

Further advantageous features of the invention are set out in claims 2 to 13.

The present invention also provides a first and second screen assembly used in the screen arrangement.

The present invention also provides a vibratory separator comprising at least one support screen or screen assembly or screen arrangement of the invention wherein said vibratory separator comprises a basket and a vibratory mechanism, said screen arrangement fixed in said basket.
Figure 1A is a perspective view of two screen assemblies in accordance with the present invention, in an engaged position;
Figure 1B is an enlarged view of part of the two screen assemblies of Figure 1A, in a disengaged position;
Figure 1C is a cross-section view of an end view of one of the screen assembly of Figure 1A;
Figure 2A is a perspective view of two screen assemblies in accordance with the present invention, in engaged position;
Figure 2B is an enlarged view of part of the screen assemblies of Figure 2A, in a disengaged position;
Figure 3A is a perspective view of two screen assemblies in accordance with the present invention, in an engaged position;
Figure 3B is an enlarged view of part of the screen assemblies of Figure 3A, in a disengaged position;
Figure 4A is a perspective view of two screen assemblies in accordance with the present invention, in an engaged position;
Figure 4B is an enlarged view of part of the screen assemblies of Figure 4A, in a disengaged position;
Figure 5A to 5H are perspective views of parts of screen assemblies in accordance with the present invention;
Figure 6 is a top view of a screen assembly in accordance with the present invention;

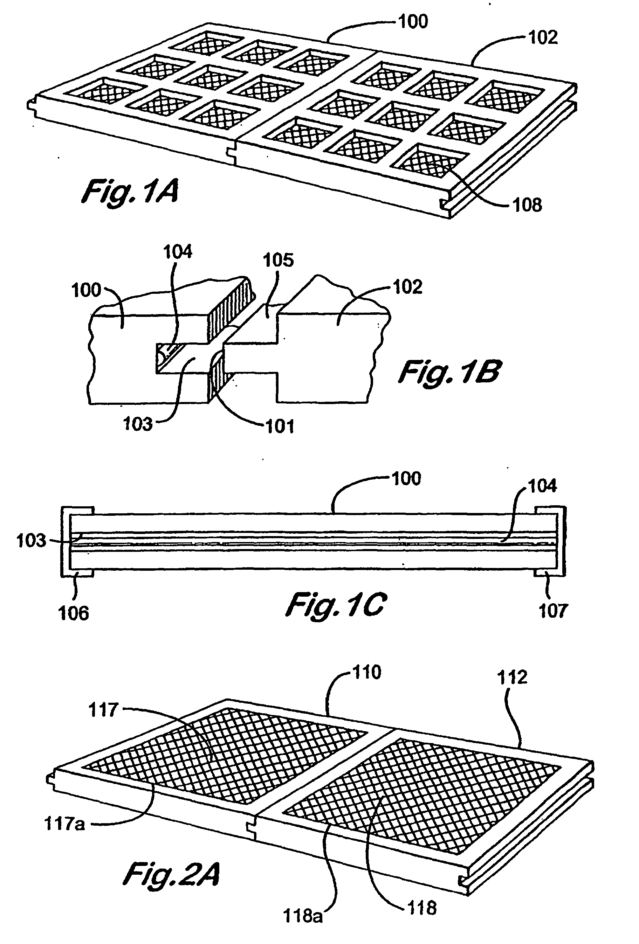

Figures 1A to 1C show two substantially identical screen assemblies in accordance with the present invention, generally identified by the reference numerals 100 and 102. Screen assembly 100 has an end with a groove 103 that extends from one side of the screen 100 to the other. A seal member 104 also extends within the groove from one side of the screen 100 to the other side. The seal member 104 may be formed integrally of the screen 100 or it maybe a separate member adhered and/or secured to the screen 100 with any suitable known adhesive, glue, and/or fastener.

The groove 103 is sized and configured to receive a tongue 105 of the screen assembly 102. An end surface 101 of the tongue 105 sealingly abuts the seal member 104 of the screen assembly 100.

The screen assemblies 100 and 102 have screening areas 108 that include screening material and are defined by cross openings in a frame.

Screens 110 and 112 as shown in Figures 2A and 28 are similar to the screen assemblies of Figure 1A; but screening material 117, 118 covers openings 117a, 118a, respectively, through the screens 110, 112, respectively. Optionally, any known screen support, strips, straps, or plate may be used with the screens 110, 112 beneath the screening material.

A seal member 114 is like the seal member 104 of Figure 1B; a tongue 115 and end surface 111 are like the tongue 105 and end surface 101 of Figure 1B, respectively; and a groove 113 is like the groove 103 of Figure 1B.

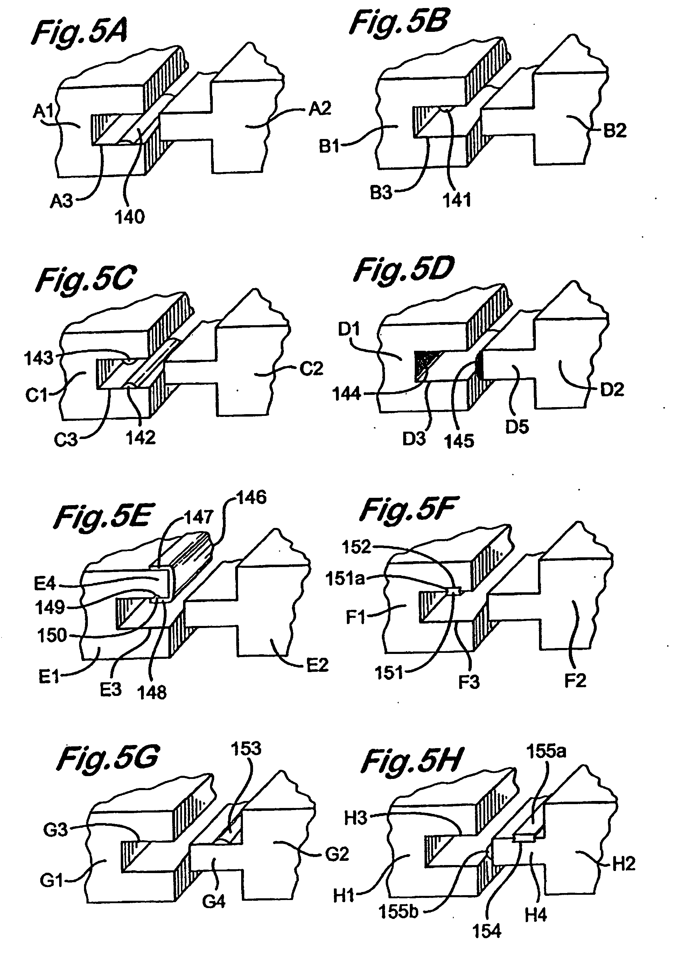

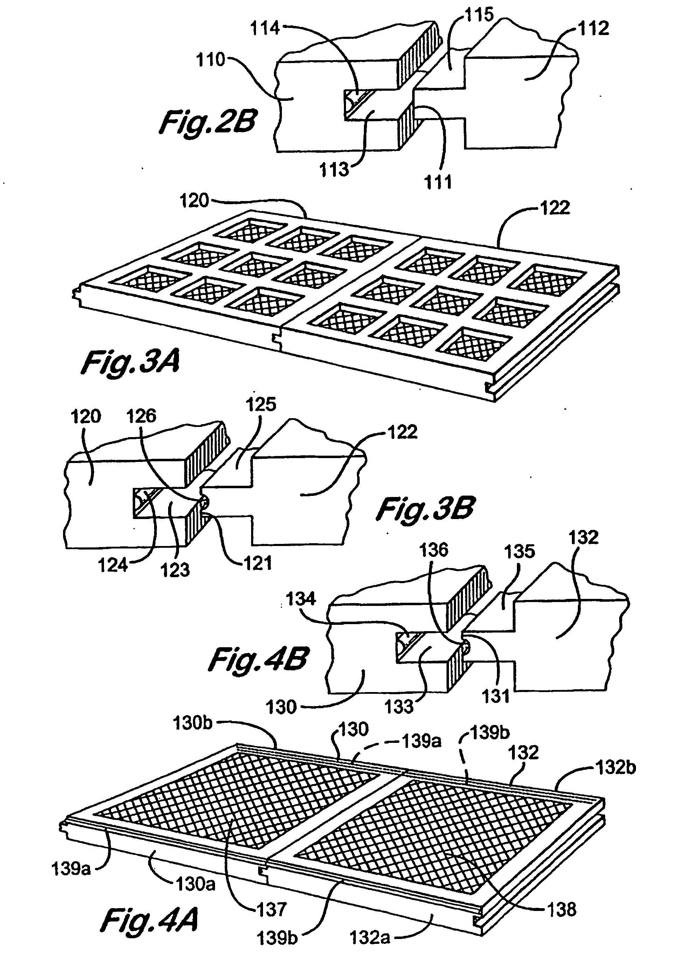

Figures 3A and 3B show two substantially identical screen assemblies in accordance with the present invention, generally identified by the reference numerals 120 and 122 which are similar to the screen assemblies of Figures 1A and 2A; but a tongue 125 of the screen assembly 122 has an end surface 121 with a groove 126 therein that is sized, positioned, and shaped to receive therein at least a portion of a seal member 124 in a groove 123 of the screen assembly 120. The groove 126 extends across the tongue 125, from one side of the screen 122 to the other. Correspondingly, the seal member 124 extends across the screen assembly 120.

Figures 4A and 4B show two substantially identical screen assemblies in accordance with the present invention, generally identified by the reference numerals 130 and 132 which are like the screens 110, 112 of Figure 2A; but the screen assembly 132 has a tongue 135 (like the tongue 115, Figure 2B) with an end surface 131 (like the end surface 11, Figure 2B) with a groove 136 that extends across the screen assembly 132 from one side to the other and sealingly receives therein at least a portion of a seal member 134 in a groove 133 (like the groove 113, Figure 2B) of the screen 130. Screening material 138 is like the screening material 118, Figure 2A, over openings, not shown, like the openings 117a, 118a of Figure 2A. The screen 130, optionally, has a seal member 139a along each of its sides 130a, 130b; and the screen 132 has a seal member 139b along each of its sides 132a, 132b. The seal members 139a, 139b may be any seal member disclosed herein adhered or secured in any manner disclosed herein. Any screen or screen assembly disclosed herein may have side seal members like the seal members 139a, 139b in addition to, or instead of, any of the end seal members disclosed herein.

Figures 5A to 5H illustrate partially various screens according to the present invention with a variety of seal members. For each of these screens, although they are shown partially, it is to be understood that they are like the complete screens or screen assemblies disclosed herein and/or referred to herein and that the structures of Figures 5A to 5H may be used for any screen or screen assembly referred to or disclosed herein.

Figure 5A shows two screen assemblies A1 with a groove A3 (like the groove 103, Figure 1B) and a seal member 140 (like the seal member 104, Figure 1B. The screen assembly A2 is like the screen assembly 102, Figures 1A, 1B. However, the seal 140 is arranged on a bottom surface of the groove A3.

Figure 5B shows two screen assemblies B1 with a groove B3 (like the groove 103, Figure 1B) and a seal member 141 (like the seal member 104, Figure 1B. The screen assembly B2 is like the screen assembly 102, Figures 1A, 1B. However, the seal 141 is arranged on a top surface of the groove B3.

Figure 5C shows a screen assembly C1 with a groove C3 (like the groove 103, Figure 1B) and seal members 142 and 143 (like the seal member 104, Figure 1B). The screen C2 is like the screen 102, Figures 1A, 1B. However, the seals 142 and 143 are arranged respectively on a bottom and top surface of the groove C3.

Figure 5D shows a screen D1 with a groove D3 (like the groove 103, Figure 1B) and an amount 144 of a releasably cooperating fastener material (for example hook-loop material or VELCRO - TM material). The screen D2 is like the screen 102, Figures 1A, 1B. The screen D2 has an amount 145 of a releasably cooperating fastener material (for example hook-loop material or VELCRO - TM material) on an end of a tongue D5. Additionally, seals may be provided on the top and/or bottom surfaces of the groove, as shown in Figures 5A, 5B and 5C.

Figure 5E shows a screen E1 with a groove E3 (like the groove 103, Figure 1B) and a seal member 146. The seal member 146 is held on a portion E4 of the screen E1 by a friction fit and/or by a suitable adhesive. The seal member 146 has an upper arm 147 and a lower arm 148 with a projecting rib 50 that releasably resides in a corresponding notch 149 of the portion E4. The projecting rib 50 extends along the entire length of the portion E4, but it is within the scope of this invention to use a single projecting bead or series of beads on the seal member 146 and corresponding recesses on the portion E4. The screen E2 is like the screen 102, Figures 1A, 1B.

Figure 5F shows a screen assembly F1 with a groove F3 (like the groove 103, Figure 1B) and a seal member 151. The seal member 151 has a portion 151a that releasably resides in a corresponding recess 152 of the screen assembly Fl. Alternatively or in addition to having the seal member releasably connected to the screen assembly F3, adhesive may be used to attach the seal member 151 to the screen F3 (as may the seal member 146 be attached to the screen assembly E3, Figure 5E and any seal member in any screen disclosed herein). The screen assembly F2 is like the screen assembly 102, Figures 1A, 1B.

Figure 5G shows a screen assembly G1 with a groove G3 (like the groove 103, Figure 1B). A seal member 153 is on a tongue G4 of a screen assembly G2 (like the screen assembly 102, Figures 1A, 1B).

Figure 5H shows a screen assembly H1 with a groove H3 (like the groove 103, Figure 1B). A screen assembly H2 (like the screen 102, Figures 1A, 1B) has a tongue H4 with a seal member 155b.

Any seal member for any screen assembly disclosed herein may be connected to, attached to or formed integrally of its corresponding screen. Any seal member shown in Figures 5A to 5H is to be understood as, preferably, extending along the entire length of the side or tongue at which it is located; although shorter seal members used only on part of said sides or members are within the scope of this invention.

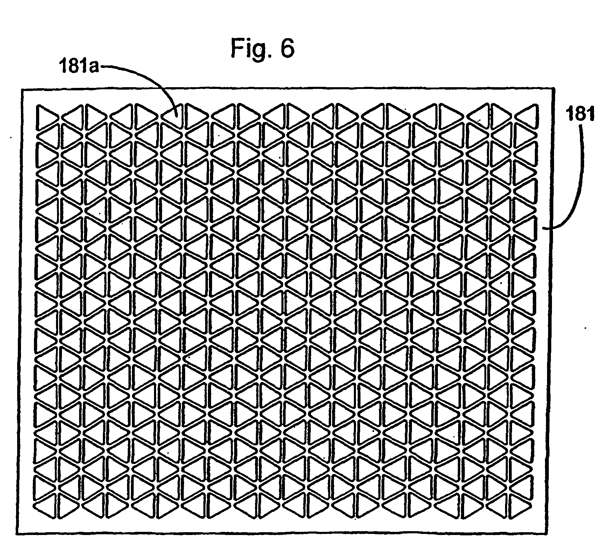

Figures 6 illustrates a perforated plate 181 having a plurality of triangular openings 181a therethrough. The openings 181a may be any suitable shape, such as square or rectangular.

## Claims

1. A screen arrangement for a vibratory separator, the screen arrangement comprising a first screen assembly (100;110;120;130;A1;B1;C1;D1;E1;F1;G1;H1) having a frame to which is mounted screening material and a second screen assembly (102;112;122;132;A2;B2;C2;D2;E2;F2;G2;H2) having a frame to which is mounted screening material, one of the frames having a tongue (105;115;125;135;D5;G4;H4) and the other having a groove (103;113;123;133;A3;B3;C3;D3;E3;F3;G3;H3) for receiving said tongue, wherein one of said tongue and groove has a seal member (104;114;124;134;140;141;142,143;144,145;148; 151;153;155a,155b) arranged thereon.

2. A screen arrangement as claimed in Claim 1, wherein, in use, the at least one seal member is within the groove when the tongue is received in the groove.

3. A screen arrangement as claimed in Claim 2 or 3, wherein said tongue (125; 135; H4) has a recess (126; 136; 154) therein for receiving a portion of said at least one seal member (124; 134; 155a).

4. A screen arrangement as claimed in Claim 1, 2 or 3, wherein said at least one seal member comprises two spaced-apart seal members (142, 143; 144, 145; 155a, 155b).

5. A screen arrangement as claimed in Claim 4, wherein each of said two spaced-apart seal members (142; 143) are arranged in said groove (C3).

6. A screen arrangement as claimed in Claim 5, wherein each of said two spaced-apart seal members are located on opposing faces of said groove (142,143).

7. A screen arrangement as claimed in any preceding claim, wherein said frame of said first screen assembly comprises a groove and an end portion (147) forming part of said groove, wherein said at least one seal member further comprises a channel-shaped member (146) partially encompassing part of the end portion of said first screen assembly.

8. A screen arrangement as claimed in Claim 7, wherein said channel-shaped member (146) has a bead (150) projecting therefrom and the end portion (E4) of the first screen assembly has a correspondingly-shaped recess (149) for receiving said bead (146) for facilitating emplacement of the at least one seal member on the end portion (E4) of the first screen assembly.

9. A screen arrangement as claimed in any preceding claim, wherein said first screen assembly comprises a groove and an end portion (147) forming part of said groove, said end portion (F3) having a notch (152) therein and said at least one seal member (151) has a corresponding shaped portion for receipt within said notch (152) to hold said at least one seal member (151) to the first screen assembly.

10. A screen arrangement as claimed in any preceding claim, wherein said at least one seal member is secured to said first screen assembly with at least one fastener.

11. A screen arrangement as claimed in any preceding claim, further comprising a perforated plate (181) secured to or integral with said frame of said first or second screen assembly.

12. A screen arrangement as claimed in Claim 11, wherein at least one layer of screening material is arranged on said perforated plate (181).

13. A screen arrangement as claimed in any preceding claim, wherein the frame of said first or second screen assembly comprises interconnected sides and the at least one seal member extends along substantially an entire length of one of the sides.

14. A first screen assembly of the screen arrangement as claimed in any preceding claim wherein the first screen comprises the tongue and the seal member is arranged on the tongue.

15. A second screen assembly of the screen arrangement as claimed in any of claims 1 to 13, wherein the second screen comprises the groove and the seal member is arranged on the groove.

16. A vibratory separator comprising the screen arrangement as claimed in any of Claims 1 to 13, wherein said vibratory separator comprises a basket and a vibratory mechanism, said screen arrangement fixed in said basket.

## Patentansprüche

1. Siebanordnung fiir einen Schwingungsseparator, wobei die Siebanordnung eine erste Siebbaueinheit (100; 110; 120; 130; Al; B1; C1; D1; E1; F1; G1; H1), die einen Rahmen besitzt, an dem Siebmaterial angebracht ist, und eine zweite Siebbaueinheit (102; 112; 122; 132; A2; B2; C2; D2; E2; F2; G2; H2), die einen Rahmen besitzt, an dem Siebmaterial angebracht ist, umfasst, wobei einer der Rahmen eine Zunge (105; 115; 125; 135; D5; G4; H4) und der andere der Rahmen eine Nut (103; 113; 123; 133; A3; B3; C3; D3; E3; F3; G3; H3) zum Aufnehmen der Zunge besitzt, wobei entweder die Zunge oder die Nut ein Dichtungselement (104; 114; 124; 134; 140; 141; 142; 143; 144, 145; 148; 151; 153; 155a, 155b), das daran angeordnet ist, besitzt.

2. Siebanordnung nach Anspruch 1, bei der sich im Gebrauch das wenigstens eine Dichtungselement in der Nut befindet, wenn die Zunge in der Nut aufgenommen ist.

3. Siebanordnung nach Anspruch 2 oder 3, bei der die Zunge (125; 135; H4) eine Aussparung (126; 136; 154) besitzt, um einen Abschnitt des wenigstens einen Dichtungselements 124; 134; 155a) aufzunehmen.

4. Siebanordnung nach Anspruch 1, 2 oder 3, bei der das wenigstens eine Dichtungselement zwei voneinander beabstandete Dichtungselemente (142, 143; 144, 145; 155a, 155b) umfasst.

5. Siebanordnung nach Anspruch 4, bei der jedes der zwei voneinander beabstandeten Dichtungselemente (142; 143) in der Nut (C3) angeordnet ist.

6. Siebanordnung nach Anspruch 5, bei der sich jedes der zwei voneinander beabstandeten Dichtungselemente auf gegenüberliegenden Flächen der Nut (142, 143) befindet.

7. Siebanordnung nach einem vorhergehenden Anspruch, bei der der Rahmen der ersten Siebbaueinheit eine Nut und einen einen Teil der Nut bildenden Endabschnitt (147) umfasst, wobei das wenigstens eine Dichtungselement ferner ein kanalförmiges Element (146) aufweist, das den Teil des Endabschnitts der ersten Siebbaueinheit teilweise umgibt.

8. Siebanordnung nach Anspruch 7, bei der das kanalförmige Element (146) einen Wulst (150) besitzt, der von ihm vorsteht, und der Endabschnitt (E4) der ersten Siebbaueinheit eine entsprechend geformte Aussparung (149) zum Aufnehmen des Wulstes (146) besitzt, um das Einsetzen des wenigstens einen Dichtungselements in den Endabschnitt (E4) der ersten Siebbaueinheit zu erleichtern.

9. Siebanordnung nach einem vorhergehenden Anspruch, bei der die erste Siebbaueinheit eine Nut und einen einen Teil der Nut bildenden Endabschnitt (147) umfasst, wobei der Endabschnitt (F3) eine Kerbe (152) aufweist und das wenigstens eine Dichtungselement (151) einen entsprechend geformten Abschnitt, der in der Kerbe (152) aufgenommen wird, umfasst, um das wenigstens eine Dichtungselement (151) an der ersten Siebbaueinheit zu halten.

10. Siebanordnung nach einem vorhergehenden Anspruch, bei der das wenigstens eine Dichtungselement an der ersten Siebbaueinheit mit wenigstens einer Befestigungseinrichtung befestigt ist.

11. Siebanordnung nach einem vorhergehenden Anspruch, ferner mit einer Lochplatte (181), die an dem Rahmen der ersten oder der zweiten Siebbaueinheit befestigt oder einteilig mit ihr ausgebildet ist.

12. Siebanordnung nach Anspruch 11, bei der wenigstens eine Lage des Siebmaterials auf der Lochplatte (181) angeordnet ist.

13. Siebanordnung nach einem vorhergehenden Anspruch, bei der der Rahmen der ersten oder der zweiten Siebbaueinheit miteinander verbundene Seiten aufweist und das wenigstens eine Dichtungselement sich im Wesentlichen über die gesamte Länge der einen der Seiten erstreckt.

14. Erste Siebbaueinheit der Siebanordnung nach einem vorhergehenden Anspruch, bei der das erste Sieb die Zunge aufweist und das Dichtungselement an der Zunge angeordnet ist.

15. Zweite Siebbaueinheit der Siebanordnung nach einem der Ansprüche 1 bis 13, bei der das zweite Sieb die Nut aufweist und das Dichtungselement an der Nut angeordnet ist.

16. Schwingungsseparator, der die Siebanordnung nach einem der Ansprüche 1 bis 13 umfasst, wobei der Schwingungsseparator einen Korb und einen Schwingungsmechanismus umfasst, wobei die Siebanordnung in dem Korb befestigt ist.

## Revendications

1. Agencement de crible pour un séparateur vibrant, l'agencement de crible comprenant un premier ensemble de cribles (100 ; 110 ; 120 ; 130 ; A1 ; B1 ; C1 ; D1 ; E1 ; F1 ; G1 ; H1) comportant un bâti sur lequel est déposé un matériau de criblage et un second ensemble de cribles (102 ; 112 ; 122 ; 132 ; A2 ; B2 ; C2 ; D2 ; E2 ; F2 ; G2; H2) comportant un bâti sur lequel est déposé un matériau de criblage, l'un des bâtis comportant une languette (105 ; 115 ; 125 ; 135 ; D5 ; G4 ; H4) et l'autre comportant une rainure (103 ; 113 ; 123 ; 133 ; A3 ; B3 ; C3 ; D3 ; E3 ; F3 ; G3 ; H3) pour recevoir ladite languette, dans lequel l'une de ladite languette ou de ladite rainure possède un élément d'étanchéité (104 ; 114 ;: 124 ; 134 ; 140 ; 141 ; 142 ; 143 ; 144 ; 145 ; 148 ; 151 ; 153 ; 155a, 155b) disposé sur elle.

2. Agencement de cribles selon la revendication 1, dans lequel en fonctionnement, le ou les élément(s) d'étanchéité se trouve(nt) à l'intérieur de la rainure lorsque la languette est logée dans la rainure.

3. Agencement de cribles selon la revendication 2 ou 3, dans lequel ladite languette (125 ; 135 ; H4) possède un évidement (126 ; 136 ; 154) pour y recevoir une partie dudit ou desdits élément (s) d'étanchéité (124 ; 134 ; 155a).

4. Agencement de cribles selon la revendication 1, 2 ou 3, dans lequel ledit (lesdits) élément(s) d'étanchéité comporte(nt) deux éléments d'étanchéité séparés (142 ; 143 ; 144, 145 ;155a, 155b).

5. Agencement de cribles selon la revendication 4 dans lequel chacun des deux dits éléments d'étanchéité séparés (142 ; 143) est disposé dans ladite rainure (C3).

6. Agencement de cribles selon la revendication 5 dans lequel chacun des deux dits éléments d'étanchéité séparés (142 ; 143) est placé sur les surfaces opposées de ladite rainure (C3).

7. Agencement de cribles selon l'une quelconque des revendications précédentes dans lequel ledit bâti dudit premier ensemble de cribles comporte une rainure et une partie d'extrémité (147) faisant partie de ladite rainure, dans lequel ledit (lesdits) élément(s) d'étanchéité comprend (comprennent), de plus, un élément en forme de canal (146) enveloppant partiellement une portion de la partie d'extrémité dudit premier ensemble de cribles.

8. Agencement de cribles selon la revendication 7 dans lequel ledit élément en forme de canal (146) comporte un rebord (150) s'avançant à partir de lui et la partie d'extrémité (E4) de premier ensemble de cribles comporte un évidement configuré de façon correspondante (149) pour recevoir ledit rebord (146) afin de faciliter la mise en place de l'élément ou des éléments d'étanchéité sur la partie d'extrémité (E4) du premier ensemble de cribles.

9. Agencement de cribles selon l'une quelconque des revendications précédentes dans lequel ledit premier ensemble de cribles comprend une rainure et une partie d'extrémité (147) faisant partie de ladite rainure, ladite partie d'extrémité (F3) comportant une encoche (152) et ledit (lesdits) élément(s) d'étanchéité (151) possède(nt) une partie configurée de façon correspondante pour être reçue à l'intérieur de ladite encoche (152) pour maintenir ledit (lesdits) élément(s) d'étanchéité (151) sur ledit premier ensemble de cribles.

10. Agencement de cribles selon l'une quelconque des revendications précédentes dans lequel ledit (lesdits) élément(s) d'étanchéité est (sont) fixé(s) audit premier ensemble de cribles avec au moins un élément de fixation.

11. Agencement de cribles selon l'une quelconque des revendications précédentes comprenant, de plus, une plaque perforée (181) fixée audit, ou solidaire dudit, bâti dudit premier ou dudit second ensemble de cribles.

12. Agencement de cribles selon la revendication 11, dans lequel au moins une couche de matériau de criblage est disposée sur ladite plaque perforée (181).

13. Agencement de cribles selon l'une quelconque des revendications précédentes dans lequel le bâti dudit premier ou second ensemble de cribles comprend des côtés interconnectés et le ou les élément(s) d'étanchéité s'étende (s'étendent) essentiellement sur toute la longueur de l'un des côtés.

14. Premier ensemble de cribles de l'agencement de cribles selon l'une quelconque des revendications précédentes dans lequel le premier crible comprend la languette et l'élément d'étanchéité est disposé sur la languette.

15. Second ensemble de cribles de l'agencement de cribles selon l'une quelconque des revendications 1 à 13 dans lequel le second crible comprend la rainure et l'élément d'étanchéité est disposé sur la rainure.

16. Séparateur vibrant comprenant l'agencement de cribles selon l'une quelconque des revendications 1 à 13, dans lequel ledit séparateur vibrant comporte un panier et un mécanisme vibratoire, ledit agencement de cribles étant fixé audit panier.
